# EUROPÄISCHE PATENTSCHRIFT

(11) **EP 1 525 132 B1**
(45) Veröffentlichungstag und Bekanntmachung des Hinweises auf die Patenterteilung: **29.08.2007**
(21) Anmeldenummer: 03740400.1
(22) Anmeldetag: 02.07.2003
(51) Int. Cl.: B62D 25/20

(54) **BODENTRÄGERANORDNUNG AN KRAFTFAHRZEUGEN**
FLOOR-SUPPORTING ARRANGEMENT IN MOTOR VEHICLES
ENSEMBLE DE SUPPORT DE SOL POUR AUTOMOBILE

(30) Priorität: 19.07.2002 DE 10232841
(43) Veröffentlichungstag der Anmeldung: 27.04.2005
(73) Patentinhaber: Volkswagen Aktiengesellschaft, 38436 Wolfsburg (DE)
(72) Erfinder: MORSCH, Klaus-Dieter, 38102 Braunschweig (DE); HILLMANN, Jürgen, 38518 Gifhorn (DE)
(86) Internationale Anmeldenummer: PCT/EP2003/007034
(87) Internationale Veröffentlichungsnummer: WO 2004/009428

(56) Entgegenhaltungen:
- EP-A- 1 029 773
- EP-A- 1 186 516
- US-A- 4 557 519
- US-A- 5 562 329
- US-A1- 2001 028 179
- PATENT ABSTRACTS OF JAPAN vol. 1999, no. 01, 29. Januar 1999 (1999-01-29) -& JP 10 264846 A (MAZDA MOTOR CORP), 6. Oktober 1998 (1998-10-06)

## Beschreibung

Die Erfindung betrifft eine Bodenträgeranordnung an Kraftfahrzeugen nach dem Oberbegriff des Anspruchs 1.

Bodenträgeranordnungen an Kraftfahrzeugen sind in den vielfältigsten Ausführungsformen bekannt. Mit der EP 0 602 331 A1 werden beispielsweise höhenversetzt und sich nach unten unter das Bodenblech erstreckende sogenannte Karosserielängsträger offenbart, die in ihrem oberen Bereich zur Vermeidung von Deformationen des Fußraumes der Fahrgastzelle im Crashfall, insbesondere Frontalcrash, einen sogenannten energieverzehrenden Trägerabschnitt und nachfolgend einen leicht verformbaren Trägerabschnitt aufweisen.

Ferner ist es aus der DE 42 05 891 C2 bekannt, die Längsträger im Bereich der Fahrgastzelle aufzugabeln, wobei das innere Längsträgerglied in enger räumlicher Zuordnung zu einem Mitteltunnel und das äußere Längsträgerglied zu einem Türschweller steht. Mit dieser Maßnahme soll die Festigkeit der Bodengruppe erhöht und eine verbesserte Kraftein- und -überleitung bei großen Krafteinwirkungen ermöglicht werden.

Mit der DE 40 29 153 C2 wird des Weiteren eine Bodengruppe mit einem vorderen Querträger offenbart, der seinerseits von außen gegen ein eine Fußschräge ausbildendes Bodenblech gesetzt und mit seitlich verlaufenden Schwellern verbunden ist. Zwei höhenversetzt angeordnete Längsträger erstrecken sich vom Vorderwagen nach hinten unter das Bodenblech, sind jedoch nicht mit dem im Bereich der Fußschräge angeordneten Querträger verbunden, sondern stützen sich am Bodenblech und an hinteren Querträgern ab, die ihrerseits ebenfalls mit den Schwellern verbunden sind. Die auf die Längsträger wirkenden Kräfte sollen im Crashfall in die Schweller, das Bodenblech und ggf. den Mitteltunnel eingeleitet und durch diese Bauteile aufgenommen werden.

Weiterhin wird durch die EP 0 693 414 A1 eine Aufbaustruktur eines Personenkraftwagens offenbart, die eine zwischen dem Vorderwagen und der Fahrgastzelle angeordnete Stirnwand, zwei voneinander beabstandete vordere Längsträger, die jeweils an einem dahinterliegenden, in Verlängerung der Längsträger verlaufende Bodenträger angeschlossen sind, sowie seitlich außenliegende Schweller, aufrechte Scharniersäulen (A-Säulen) und einen Boden umfaßt. Die beiden vorderen Längsträger erstrecken sich dabei durchgehend bis zur Stirnwand und sind an einen ersten, außenseitig auf die Stirnwand aufgesetzten Querträger angeschlossen. In Höhe dieses Querträgers ist auf der der Fahrgastzelle zugekehrten Seite ein zweiter Querträger angeordnet, der seinerseits mit dem Mitteltunnel verbunden ist und sich endseitig in zwei übereinander angeordnete Hohlträger aufteilt, wobei der oben liegende Hohlträgerabschnitt an die Stirnwand und die Scharniersäule und der unten liegende Hohlträgerabschnitt mit der Stirnwand, dem Schweller und dem Boden verbunden ist. Im Ergebnis soll zum einen eine steife Fahrgastzelle geschaffen werden, zum anderen sollen Frontalaufprallkräfte gut aufzunehmen und großflächig von den vorderen Längsträgern in die angrenzende Aufbaustruktur einzuleiten sein. Als nachteilig ist herauszustellen, dass infolge der Krafteinleitung in die oberen Fahrgastzellenbereiche, nämlich die Scharniersäulen und demgemäß auch in die Dachstruktur, dieselben entsprechend auszubilden und zu dimensionieren respektive zu versteifen sind, um eine Verformung der Fahrgastzelle in diesem Bereich zu vermeiden.

Aus der US 5 562 329 A, die den Oberbegriff des Anspruchs 1 bildet, ist schließlich eine Bodenträgeranordnung an Kraftfahrzeugen bekannt, mit einem vorderen Bodenquerträger, der sich quer zur Fahrzeuglängsachse zwischen zwei seitlich der Fahrzeugkarosserie angeordneten Schwellern erstreckt und mit diesen fest verbunden ist, sowie mit zwei zwischen den Schwellern angeordneten Längsträgern, die sich ihrerseits vom Vorderwagen ausgehend nach hinten unter ein die Fahrgastzelle nach unten abschließendes Bodenblech erstrecken, wobei die Längsträger mit einem großen Profilquerschnitt gegen das Stirnblech des vorderen Bodenquerträgers stoßen und nachfolgend höhenversetzt mit im Verhältnis kleinerem Profilquerschnitt unter das Bodenblech geführt sind.

Aufgabe der Erfindung ist es, eine Bodenträgeranordnung an Kraftfahrzeugen zu schaffen, die bei hoher Eigensteifigkeit eine optimale Deformationsfreiheit des Fußraumes der Fahrgastzelle im Falle eines Crashereignisses, insbesondere eines Frontalcrashes, gewährleistet und die Kraftaufnahme und -weiterleitung im Wesentlichen auf Bereiche unterhalb und hinter der Fahrgastzelle beschränkt.

Ausgehend von einer Bodenträgeranordnung, bestehend aus einem vorderen Bodenquerträger, der sich quer zur Fahrzeuglängsachse zwischen seitlich der Fahrzeugkarosserie angeordneten Schwellern erstreckt und mit diesen fest verbunden ist, sowie zwei zwischen den Schwellern angeordneten Längsträgern, die sich ihrerseits vom Vorderwagen ausgehend nach hinten unter ein die Fahrgastzelle nach unten abschließendes Bodenblech erstrecken, wobei die Längsträger mit einem großen Profilquerschnitt gegen das Stirnblech des vorderen Bodenquerträgers stoßen und nachfolgend höhenversetzt mit im Verhältnis kleinerem Profilquerschnitt unter das Bodenblech geführt sind, wird die gestellte Aufgabe dadurch gelöst, dass der vordere Bodenquerträger mittels Stegblechen an ausgeschnittenen Schwellern festgelegt und zwischen jedem Längsträger und dem Tunnelelement wenigstens ein weiteres Längsträgerelement von unten gegen das Bodenblech gesetzt ist. Optional kann diesem wenigstens einen weiteren Längsträgerelement fahrgastzellenseitig gegenüberliegend ein Aufsatzträger zugeordnet sein kann.

Durch diese Maßnahme ist zum einen ein gegen Deformation geschützter Fußraum gewährleistet, zum anderen werden auftretende Kräfte definiert und konsequent über die Längsträger und den vorderen Querträger überwiegend in Bauteile unterhalb der Fahrgastzelle eingeleitet. Eine Belastung der Säulen und/oder der Dachstruktur infolge eines Crashes kann dadurch weitestgehend vermieden werden. Durch die besondere Anbindung des vorderen Bodenquerträgers an ausgeschnittenen Schwellern mittels besagter Stegbleche werden besonders steife Verbindungen, ähnlich einem Knotenelement erzeugt, die entgegen dem Stand der Technik (EP 0 693 414 A1) eine direkte Anbindung des Bodenquerträgers an obere Bereiche angrenzender Säulen entbehrlich machen.

Gemäß einer vorteilhaften Ausführungsvariante sind die Längsträger von vom nach hinten durchgängig ausgebildet.

Eine andere vorteilhafte Ausführungsvariante sieht vor, die Längsträger derart auszubilden, dass der jeweilige obere Trägerabschnitt mit dem großen Profilquerschnitt am Stirnblech des vorderen Bodenquerträgers aufgesetzt und der untere Trägerabschnitt mit dem kleineren Profilquerschnitt, ein separates Profil ausbildend, nach unten versetzt und unter dem Bodenblech weitergeführt ist.

Des Weiteren wird vorgeschlagen, dass die Längsträger entweder jeweils bis in Höhe eines annähernd mittig der Fahrgastzelle angeordneten Sitzquerträgers geführt sind oder sich jeweils schräg nach außen bis in Höhe des hinteren Bereiches der Fahrgastzelle in die unmittelbare Nähe des Schwellers und eines hinteren Bodenquerträgers erstrecken und an einem steifen Karosseriebauteil, wie einem Knotenelement, abstützen.

Der vordere Bodenquerträger und/oder die Längsträger können dabei aus umgeformten Stahlblech, welches nach der tailored-blank-Technik gefertigt ist, oder aus höherfestem Stahlblech bestehen.

Fernerhin wird als erfindungsgemäß angesehen, dass der vordere Bodenquerträger mittig an einem in Fahrzeuglängsrichtung innerhalb der Fahrgastzelle angeordnetem Tunnelelement festgelegt ist.

Gemäß einer weiteren Ausgestaltung der Erfindung ist der vordere Bodenquerträger durch ein offenes Hohlprofil gebildet, welches von innerhalb der Fahrgastzelle gegen ein nach oben geführtes Bodenblech gesetzt ist. Ebenso kann der vordere Bodenquerträger durch wenigstens zwei aufeinandergesetzte Profilschalen gebildet sein, die ihrerseits ein geschlossenes Hohlprofil ausbilden und sich an ein Bodenblech anschließen.

Als zweckmäßig im Sinne der Erfindung wird des Weiteren angesehen, dass fahrgastzellenseitig wenigstens im Verbindungseckbereich von Tunnelelement, vorderen Bodenquerträger und Bodenblech auf dem Bodenblech ein gegebenenfalls bis in die Kontur des Tunnelelementes reichendes Verstärkungsblech aufgebracht ist. Wie die Erfindung noch vorsieht, ist jeder Längsträger mit einem in nahezu gleicher Ebene nebengeordneten A-Säulen-Verbindungselement fest verbunden. Schließlich ist vorgesehen, den Längsträgern und/oder den Längsträgerelementen Aufnahmen zur Befestigung eines Hilfsrahmens zuzuordnen.

Die Erfindung wird nachstehend anhand der in den Zeichnungen schematisch dargestellten Ausführungsbeispiele näher erläutert. Es zeigen:
- Figur 1: die erfindungsgemäße Bodenträgeranordnung eines Kraftfahrzeugs, vorliegend eines PKW's, in einer perspektivischen Ansicht von unten,
- Figur 2: die schematische Darstellung der Anbindung des Bodenquerträgers an die Schweller,
- Figur 3: die schematische Darstellung der Ausbildung der Längsträger in einer ersten Ausführungsvariante,
- Figur 4: die schematische Darstellung der Ausbildung der Längsträger in einer weiteren Ausführungsvariante,
- Figur 5: die perspektivische Ansicht des Fußraums der Fahrgastzelle,
- Figur 6: den Schnitt I-I nach Fig. 5,
- Figur 7: die schematische Darstellung der Ausbildung des vorderen Bodenquerträgers in einer ersten Ausführungsvariante,
- Figur 8: die schematische Darstellung der Ausbildung des vorderen Bodenquerträgers in einer weiteren Ausführungsvariante,
- Figur 9: den Schnitt II-II nach Fig. 5.

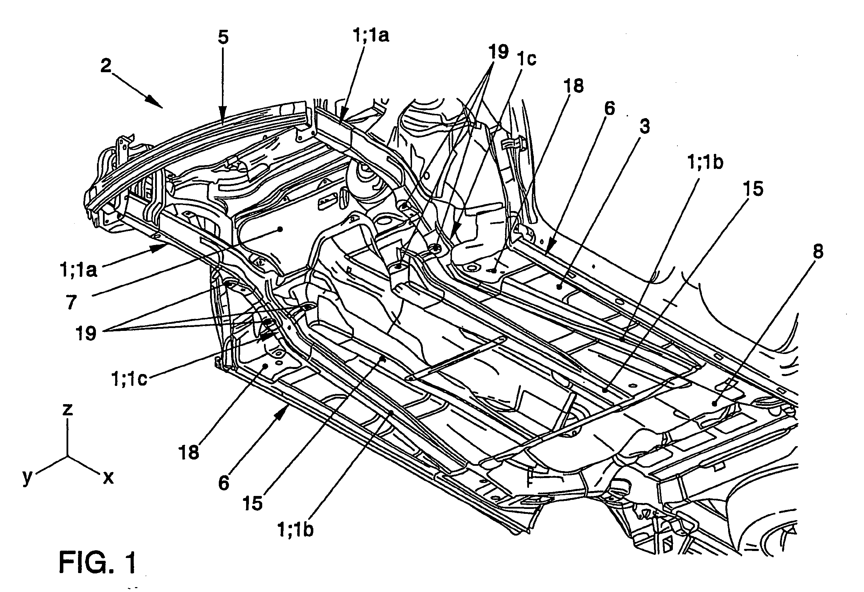

Fig. 1 zeigt den vorderen Unterbodenbereich eines Kraftfahrzeugs in einer perspektivischen Ansicht. Danach sind zwei beidseitig des Kraftfahrzeugs angeordnete Längsträger 1 vom Vorderwagen 2 des Kraftfahrzeugs ausgehend und das nicht näher dargestellte Antriebsaggregat abstützend höhenversetzt nach unten unter das Bodenblech 3 der Fahrgastzelle 4 geführt. Frontseitig sind die beiden Längsträger 1 durch einen Stoßfänger 5 miteinander verbunden. Die seitlich äußerste Begrenzung der Kraftfahrzeugkarosserie bilden sogenannte beidseitig sich jeweils in Fahrzeuglängsrichtung erstreckende Schweller 6, die Ihrerseits an einem quer zur Fahrzeuglängsachse angeordneten vorderen Bodenquerträger 7 und einem hinteren Bodenquerträger 8 angebunden sind.

Die Längsträger 1 stoßen mit einem großen Profilquerschnitt 1a gegen das Stirnblech 9 des vorderen Bodenquerträgers 7 und sind nachfolgend höhenversetzt mit im Verhältnis kleinerem Profilquerschnitt 1b unter das Bodenblech 3 geführt.

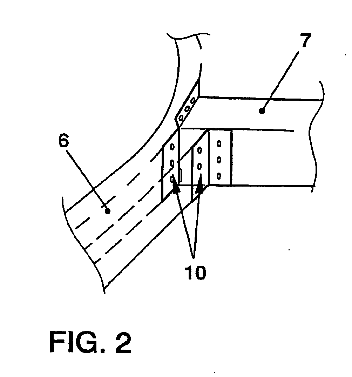

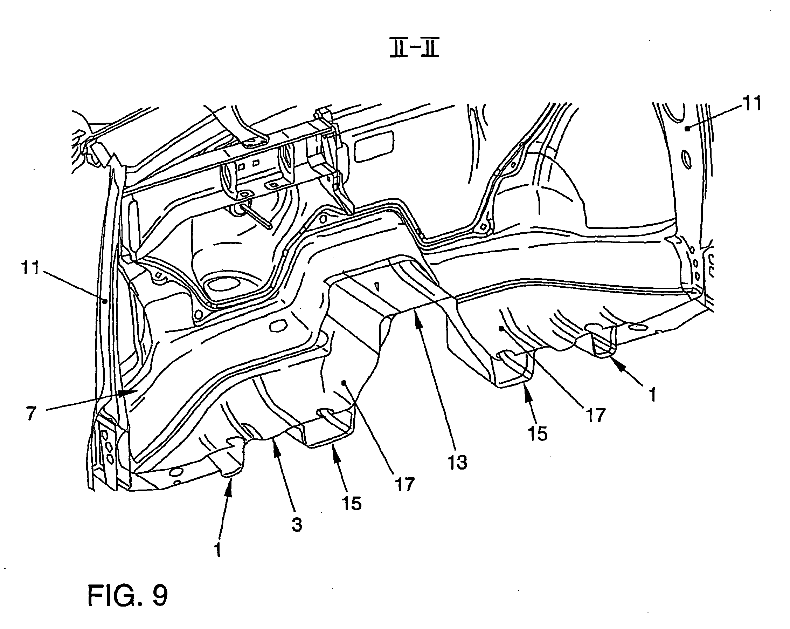

Mit dieser Maßnahme wird zum einen eine gute Aufprallstabilität, insbesondere durch die direkte Verbindung der großen Profilquerschnitte 1a der Längsträger 1 mit dem vorderen Bodenquerträger 7, erreicht, zum anderen, wie bereits oben dargetan, ein gegen Deformation geschützter Fußraum gewährleistet. Wie im Einzelnen in Fig. 2 gezeigt, ist des Weiteren der vordere Bodenquerträger 7 mittels Stegblechen 10 an ausgeschnittenen Schwellern 6 festgelegt, wodurch auftretende Kräfte definiert und konsequent über die Längsträger 1 und den vorderen Bodenquerträger 7 überwiegend In Bauteile unterhalb der Fahrgastzelle 4 eingeleitet werden. Eine Belastung der Säulen 11 - A-Säulen (Fig. 9) und/oder der Dachstruktur infolge eines Frontalcrashes kann dadurch weitestgehend vermieden werden. Durch die besondere Anbindung des vorderen Bodenquerträgers 7 an ausgeschnittenen Schwellern 6 mittels besagter Stegbleche 10 werden besonders steife Verbindungen, ähnlich einem Knotenelement erzeugt.

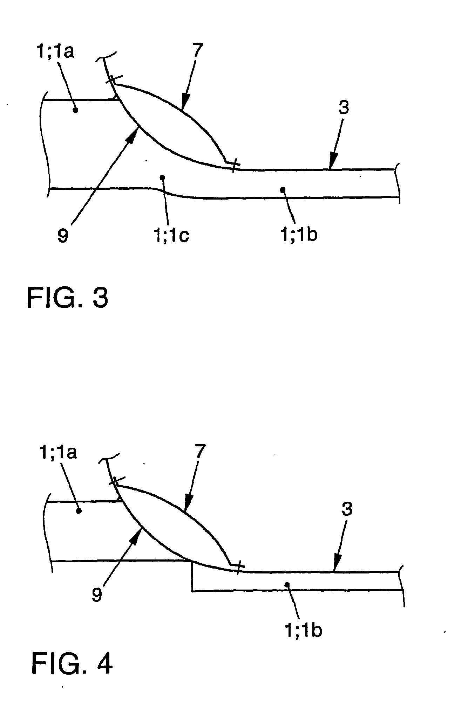

Gem. den Fig. 1 und 3 sind die Längsträger 1 derart durchgängig ausgebildet, dass der Trägerabschnitt mit dem großen Profilquerschnitt 1a zwar gegen das Stirnblech 10 des vorderen Bodenquerträgers 7 stößt, jedoch über einen Verbindungsabschnitt 1c sich im höhenversetzt angeordneten Trägerabschnitt mit dem kleineren Profilabschnitt 1b fortsetzt. Durch diese Maßnahme ist eine ununterbrochene Kraftweiterleitung in den hinteren Karosseriebereich gewährleistet.

Ein bezüglich der Wirkungsweise vergleichbares Ergebnis wird gemäß Fig. 4 dadurch erzielt, dass der obere Trägerabschnitt mit dem großen Profilquerschnitt 1a ebenfalls auf das Stirnblech 10 des vorderen Bodenquerträgers 7 aufgesetzt ist, jedoch in vereinfachter Bauweise der untere Trägerabschnitt mit dem kleinerem Profilquerschnitt 1b ein nach unten versetztes separates Profil ausbildet und vorzugsweise sich am unteren Bereich des Bodenquerträgers 7 und/oder am oberen Trägerabschnitt, zu diesem gegebenenfalls überlappend angeordnet, abstützt respektive mit diesem/n fest verbunden ist.

Wie in Fig. 1 weiter gezeigt, erstrecken sich die Längsträger 1 jeweils schräg nach außen durchgängig bis in den hinteren Bereich der Fahrgastzelle 4 in die unmittelbare Nähe des Schwellers 6 und des hinteren Bodenquerträgers 8 und stützen sich im Wesentlichen zum einen jeweils an dem vorderen Bodenquerträger 7 und zum anderen in Höhe des hinteren Bereiches der Fahrgastzelle 4 in unmittelbarer Nähe des Schwellers 6 und des hinteren Bodenquerträgers 8 an einem nicht näher dargestellten steifen Karosseriebauteil, wie einem Knotenelement, ab und sind vorzugsweise mit diesen Bauteilen verschweißt. Ferner ist wenigstens abschnittsweise eine feste Verbindung durch Schweißen mit dem Bodenblech 3 vorgesehen, um Materialschwingungen desselben, einhergehend mit störenden Geräuschen, zu unterbinden. Hierdurch wird insbesondere auch erreicht, dass im Falle eines Frontalcrashes die einwirkenden Kräfte vorteilhaft bis in den Hinterwagen weitergeleitet werden können und somit im Vergleich zum Stand der Technik ein erheblich größerer Karosseriebereich (Unterbodenbereich) in die Kraftweiterleitung und -aufnahme einbezogen werden kann.

In umfangreichen Versuchen, wurde weiterhin gefunden, dass die vorstehende Abstufung des Profilquerschnitts von vom nach hinten sich äußerst vorteilhaft auf die gewünschte Kraftweiterleitung bis in den Bereich des hinteren Bodenquerträgers 8 auswirkt. Weiterhin konnte durch diese Maßnahme das Gewicht der Bodenträgeranordnung auf ein notwendiges Minimum reduziert werden, woraus wiederum Materialeinsparungen zu verzeichnen sind.

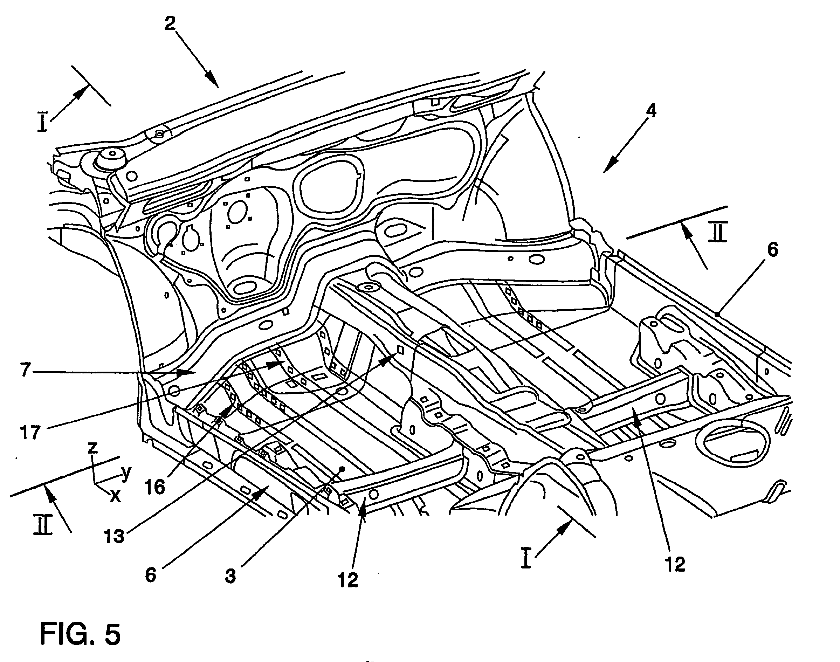

Gemäß einer weiteren, nicht näher dargestellten Ausführungsform sind die Längsträger 1 bis in Höhe eines annähernd mittig der Fahrgastzelle 4 angeordneten Sitzquerträgers 12 (Fig. 5) geführt und stützen sich vorteilhafter Weise auch an diesem ab. Auch mit dieser Maßnahme kann eine zufriedenstellende Kraftaufnahme und -weiterleitung in angrenzende Bauteile des Unterbodens gewährleistet werden.

Um eine noch höhere Versteifung der Bodenversteifungsstruktur, insbesondere In definierten, besonders beanspruchten Trägerbereichen realisieren zu können, ist es angezeigt, die Längsträger 1 und/oder den vorderen Bodenquerträger 7 aus umgeformten Stahlblech, welches nach der an sich bekannten tailord-blank-Technik gefertigt ist, auszubilden. Ebenso kann es bei besonders hoher Beanspruchung, beispielsweise bei Offroad-Fahrzeugen angezeigt sein, die Längsträger 1 und/oder den vorderen Bodenquerträger 7 aus höherfestern Stahl auszubilden. Zur weiteren Erhöhung der Steifigkeit der Struktur ist es von Vorteil, wenn der vordere Bodenquerträger 7 und/oder dessen Stirnblech 9 sowie - im Falle eines mehrteiligen Bodens - das Tunneleinsatzteil und/oder andere Teile der Bodenversteifungsstruktur aus warmumgeformtem, höchstfestem Stahlblech ausgebildet sind.

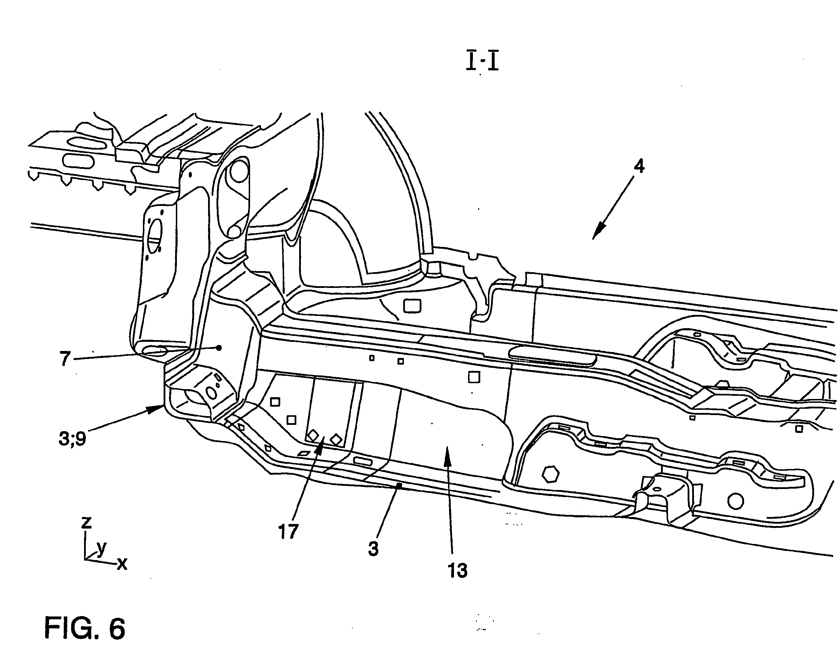

Gemäß den Fig. 5, 6 und 9 ist bekanntermaßen im Fahrzeugmittenbereich und in Fahrzeuglängsrichtung ausgerichtet ein die Fahrzeugkarosserie stabilisierendes Tunnelelement 13 angeordnet und vorzugsweise aus einem hutförmigen nach innen weisen Blech ausgebildet. Zur Erzielung einer weiteren Versteifung der Fahrzeugkarosserie, insbesondere eines erhöhten Schutzes der Fahrgastzelle 4 vor unerwünschter Verformung im Crashfall, ist der vordere Bodenquerträger 7 sowohl an den Schwellern 6 als auch am besagten Tunnelelement 13 festgelegt.

Den Fig. 5 bis 7 ist des Weiteren ein vorderer Bodenquerträger 7 zu entnehmen, der seinerseits durch ein offenes Hohlprofil gebildet ist, welches von innerhalb der Fahrgastzelle 4 gegen ein nach oben geführtes Bodenblech 3 gesetzt und mit diesem fest verbunden, vorzugsweise verschweiß ist. An dieser besonders steifen Konstruktion in Form eines geschlossenen Hohlprofils stützen sich, wie bereits oben dargetan, die Längsträger 1 ab.

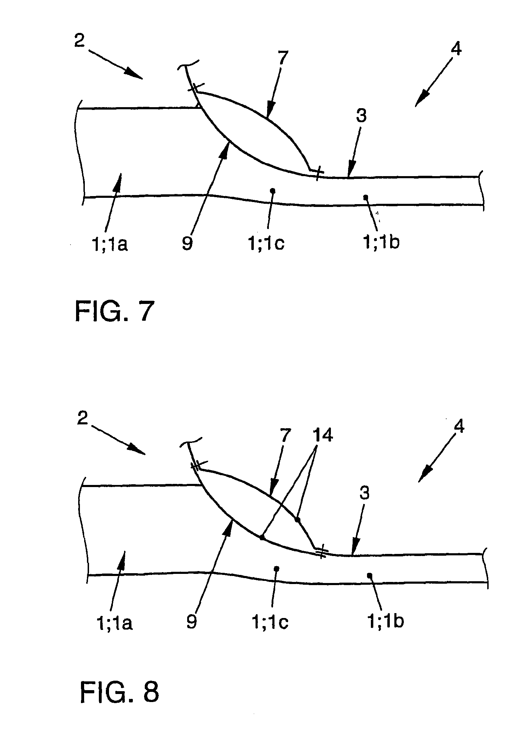

Eine weitere Möglichkeit der Erzeugung eines geeigneten vorderen Bodenquerträgers 7 ist in Fig. 8 gezeigt. Dieser besteht aus wenigstens zwei aufeinandergesetzten Profilschalen 14, die ihrerseits ebenfalls ein geschlossenes Hohlprofil ausbilden. An dieses Hohlprofil schließt sich das Bodenblech 3 an.

Eine noch größere Versteifung der Fahrzeugkarosserie wird erreicht, indem zwischen jedem Längsträger 1 und dem Tunnelelement 13 wenigstens ein weiteres Längsträgerelement 15 angeordnet und von unten gegen das Bodenblech 3 gesetzt wird (Fig. 1). Dieses Längsträgerelement 15 erstreckt sich vorliegend vom vorderen Bodenquerträger 7 bis in Höhe der Sitzquerträger 12, die ihrerseits sich jeweils in Fahrzeugquerrichtung zwischen dem Tunnelelement 13 und einem Schweller 6 erstrecken und an diesen sowie am Bodenblech 3 befestigt, vorzugsweise mit diesen verschweißt sind. Denkbar ist es jedoch auch, das Längsträgerelement 13 bis zum hinteren Bodenquerträger 8 zu führen und an diesem anzuschließen (nicht näher dargestellt).

Zusätzlich kann dem Längsträgerelement 15 fahrgastzellenseitig gegenüberliegend noch ein sogenannter Aufsatzlängsträger zugeordnet sein (nicht näher dargestellt).

Ferner hat sich in den umfangreichen Versuchen herausgestellt, dass insbesondere der Bereich des Fußraumes 16 gegen Verformung anfällig und demgemäß zu schützen ist. Zu diesem Zwecke ist gemäß Fig. 5 fahrgastzellenseitig wenigstens Im Verbindungsbereich von Tunnelelement 13, vorderem Bodenquerträger 7 und Bodenblech 3 auf dem Bodenblech 3 ein vorliegend sich bis in die Kontur des Tunnelelementes 13 reichendes Verstärkungsblech 17 aufgebracht.

Wie in Fig. 1 ersichtlich, ist es weiterhin zu diesem Zwecke angezeigt, seitlich außen ein sogenanntes A-Säulen-Verbindungselement 18 vorzusehen, welches als Blechformteil eine besonders steife Verbindung nach Art eines Knotenelementes zwischen der in Fig. 9 gezeigten A-Säule 11, dem vorderen Bodenquerträger 7, einem Längsträger 1 und einem Schweller 6 realisiert.

Diese vorstehenden Maßnahmen sind besonders geeignet, die Fahrgastzelle 4 umfassend vor Deformierung zu schützen.

Fernerhin haben sich die Längsträger 1 und vorliegend auch die weiteren Längsträgerelemente 15 besonders angeboten, an diesen einen an sich bekannten und nicht näher dargestellten Hilfsrahmen abzustützen. Demgemäß sind denselben entsprechende Aufnahmen 19 zur Befestigung des besagten Hilfsrahmens zugeordnet worden (Fig. 1).

## Patentansprüche

1. Bodenträgeranordnung an Kraftfahrzeugen, bestehend aus einem vorderen Bodenquerträger (7), der sich quer zur Fahrzeuglängsachse zwischen zwei seitlich der Fahrzeugkarosserie angeordneten Schwellern (6) erstreckt und mit diesen fest verbunden ist, sowie zwei zwischen den Schwellern (6) angeordneten Längsträgern (1), die sich ihrerseits vom Vorderwagen (2) ausgehend nach hinten unter ein die Fahrgastzelle (4) nach unten abschließendes Bodenblech (3) erstrecken, wobei die Längsträger (1) mit einem großen Profilquerschnitt (1a) gegen das Stirnblech (9) des vorderen Bodenquerträgers (7) stoßen und nachfolgend höhenversetzt mit im Verhältnis kleinerem Profilquerschnitt (1b) unter das Bodenblech (3) geführt sind,
**dadurch gekennzeichnet, dass**
der vordere Bodenquerträger (7) mittels Stegblechen (10) an ausgeschnittenen Schwellern (6) festgelegt und zwischen jedem Längsträger (1) und dem Tunnelelement (13) wenigstens ein weiteres Längsträgerelement (15) von unten gegen das Bodenblech (3) gesetzt ist.

2. Bodenträgeranordnung nach Anspruch 1,
**dadurch gekennzeichnet, dass**
jedem weiteren Längsträgerelement (15) fahrgastzellenseitig gegenüberliegend ein Aufsatzlängsträger zugeordnet ist.

3. Bodenträgeranordnung nach Anspruch 1 oder 2,
**dadurch gekennzeichnet, dass**
die Längsträger (1) durchgängig ausgebildet sind.

4. Bodenträgeranordnung nach Anspruch 1 oder 2,
**dadurch gekennzeichnet, dass**
die Längsträger (1) derart ausgebildet sind, dass der jeweilige obere Trägerabschnitt mit dem großen Profilquerschnitt (1a) am Stirnblech (9) des vorderen Bodenquerträgers (7) aufgesetzt und der untere Trägerabschnitt mit dem kleineren Profilquerschnitt (1b), ein separates Profil ausbildend, nach unten versetzt und unter dem Bodenblech (3) weitergeführt ist.

5. Bodenträgeranordnung nach einem der Ansprüche 1 bis 4,
**dadurch gekennzeichnet, dass**
die Längsträger (1) entweder jeweils bis in Höhe eines annähernd mittig der Fahrgastzelle (4) angeordneten Sitzquerträgers (12) geführt sind oder sich jeweils schräg nach außen bis in Höhe des hinteren Bereiches der Fahrgastzelle (4) in die unmittelbare Nähe des Schwellers (6) und eines hinteren Bodenquerträgers (8) erstrecken und an einem steifen Karosseriebauteil, wie einem Knotenelement, abstützen.

6. Bodenträgeranordnung nach einem der Ansprüche 1 bis 5,
**dadurch gekennzeichnet, dass**
der vordere Bodenquerträger (7) und/oder die Längsträger (1) aus umgeformten Stahlblech, welches nach der tailored-blank-Technik gefertigt ist, bestehen.

7. Bodenträgeranordnung nach einem der Ansprüche 1 bis 5,
**dadurch gekennzeichnet, dass**
der vordere Bodenquerträger (7) und/oder die Längsträger (1) aus höherfestem Stahlblech bestehen.

8. Bodenträgeranordnung nach einem der Ansprüche 1 bis 7,
**dadurch gekennzeichnet, dass**
der vordere Bodenquerträger (7) mittig an einem in Fahrzeuglängsrichtung innerhalb der Fahrgastzelle (4) angeordnetem Tunnelelement (13) festgelegt ist.

9. Bodenträgeranordnung nach einem der Ansprüche 1 bis 8,
**dadurch gekennzeichnet, dass**
der vordere Bodenquerträger (7) durch ein offenes Hohlprofil gebildet ist, welches von innerhalb der Fahrgastzelle (4) gegen ein nach oben geführtes Bodenblech (3) gesetzt ist.

10. Bodenträgeranordnung nach einem der Ansprüche 1 bis 8,
**dadurch gekennzeichnet, dass**
der vordere Bodenquerträger (7) durch wenigstens zwei aufeinandergesetzte Profilschalen (14) gebildet ist, die ihrerseits ein geschlossenes Hohlprofil ausbilden und sich an ein Bodenblech (3) anschließen.

11. Bodenträgeranordnung nach einem der Ansprüche 1 bis 10,
**dadurch gekennzeichnet, dass**
fahrgastzellenseitig wenigstens im Verbindungseckbereich von Tunnelelement (13), vorderen Bodenquerträger (7) und Bodenblech (3) auf dem Bodenblech (3) ein gegebenenfalls bis in die Kontur des Tunnelelementes (13) reichendes Verstärkungsblech (17) aufgebracht ist.

12. Bodenträgeranordnung nach einem der Ansprüche 1 bis 11,
**dadurch gekennzeichnet, dass**
jeder Längsträger (1) mit einem in nahezu gleicher Ebene nebengeordneten A-Säulen-Verbindungselement (18) fest verbunden ist.

13. Bodenträgeranordnung nach einem der Ansprüche 1 bis 12,
**dadurch gekennzeichnet, dass**
den Längsträgern (1) und/oder den Längsträgerelementen (15) Aufnahmen (19) zur Befestigung eines Hilfsrahmens zugeordnet sind.

## Claims

1. Floor-supporting arrangement in motor vehicles, comprising a front floor crossmember (7), which extends transversely to the longitudinal axis of the vehicle between two sills (6) arranged at the sides of the vehicle bodywork and is connected fixedly to them, and two longitudinal members (1), which are arranged between the sills (6) and, for their part, extend from the front part of the vehicle (2) rearward under a floor panel (3), which closes off the passenger cell (4) downward, wherein the longitudinal members (1) butt with a large profile cross section (1a) against the end panel (9) of the front floor crossmember (7) and are subsequently guided offset in height with a profile cross section (1b) which is smaller in comparison under the floor panel (3), **characterized in that** the front floor crossmember (7) is fixed on stamped-out sills (6) by means of web plates (10) and between each longitudinal member (1) and the tunnel element (13) at least one further longitudinal member element (15) is placed from below against the floor panel (3).

2. Floor-supporting arrangement according to Claim 1, **characterized in that** each further longitudinal member element (15) is assigned, lying opposite it on the passenger cell side, an add-on longitudinal member.

3. Floor-supporting arrangement according to Claim 1 or 2, **characterized in that** the longitudinal members (1) are of continuous design.

4. Floor-supporting arrangement according to Claim 1 or 2, **characterized in that** the longitudinal members (1) are designed in such a manner that the respective upper member section having the large profile cross section (1a) is placed on the end panel (9) of the front floor crossmember (7) and the lower member section having the smaller profile cross section (1b), forming a separate profile, is offset downward and continued below the floor panel (3).

5. Floor-supporting arrangement according to one of Claims 1 to 4, **characterized in that** the longitudinal members (1) are either in each case guided until level with a seat crossmember (12), which is arranged approximately in the centre of the passenger cell (4), or in each case extend obliquely outward, until level with the rear region of the passenger cell (4), into the direct vicinity of the sill (6) and of a rear floor crossmember (8) and are supported on a stiff bodywork component, such as a junction element.

6. Floor-supporting arrangement according to one of Claims 1 to 5, **characterized in that** the front floor crossmember (7) and/or the longitudinal members (1) consist of formed steel sheet which is manufactured by the tailored-blank technique.

7. Floor-supporting arrangement according to one of Claims 1 to 5, **characterized in that** the front floor crossmember (7) and/or the longitudinal members (1) consist of higher strength steel sheet.

8. Floor-supporting arrangement according to one of Claims 1 to 7, **characterized in that** the front floor crossmember (7) is fixed centrally on a tunnel element (13) arranged in the longitudinal direction of the vehicle within the passenger cell (4).

9. Floor-supporting arrangement according to one of Claims 1 to 8, **characterized in that** the front floor crossmember (7) is formed by an open hollow profile which is placed from within the passenger cell (4) against a floor panel (3) which is guided upward.

10. Floor-supporting arrangement according to one of Claims 1 to 8, **characterized in that** the front floor crossmember (7) is formed by at least two profile shells (14) which are placed one on the other, for their part form a closed hollow profile and adjoin a floor panel (3).

11. Floor-supporting arrangement according to one of Claims 1 to 10, **characterized in that** a reinforcing plate (17) reaching, if appropriate, into the contour of the tunnel element (13) is placed on the floor panel (3) on the passenger cell side, at least in the connecting corner region of the tunnel element (13), front floor crossmember (7) and floor panel (3).

12. Floor-supporting arrangement according to one of Claims 1 to 11, **characterized in that** each longitudinal member (1) is connected fixedly to an A-pillar connecting element (18) arranged next to it in virtually the same plane.

13. Floor-supporting arrangement according to one of Claims 1 to 12, **characterized in that** the longitudinal members (1) and/or the longitudinal member elements (15) are assigned mounts (19) for the securing of an auxiliary frame.

## Revendications

1. Système de support de plancher pour véhicules automobiles, constitué d'une traverse avant de plancher (7) qui s'étend transversalement par rapport à l'axe longitudinal du véhicule entre deux poutrelles (6) disposées sur les côtés de la carrosserie du véhicule et qui est reliée solidairement à ces dernières, ainsi que de deux supports longitudinaux (1) disposés entre les poutrelles (6) et qui, partant de l'avant (2) de la voiture, s'étendent vers l'arrière en dessous d'une tôle de plancher (3) qui ferme l'habitacle (4) dans le bas, les supports longitudinaux (1) venant buter par une grande section transversale profilée (1a) contre la tôle frontale (9) du support transversal avant de plancher (7) et se prolongeant ensuite en décalage de hauteur en dessous de la tôle de plancher (3) avec une section transversale profilée (1b) plus petite,
**caractérisé en ce que**
le support transversal avant de plancher (7) est fixé au moyen de tôles transversales (10) à des poutrelles (6) découpées et au moins un autre élément (15) de support longitudinal est placé par le bas contre la tôle de plancher (3) entre chaque support longitudinal (1) et l'élément en tunnel (13).

2. Système de support de plancher selon la revendication 1, **caractérisé en ce qu'**un support longitudinal de recouvrement est associé à chaque autre élément (15) de support longitudinal face à l'habitacle.

3. Système de support de plancher selon les revendications 1 ou 2, **caractérisé en ce que** les supports longitudinaux (1) sont continus.

4. Système de support de plancher selon les revendications 1 ou 2, **caractérisé en ce que** les supports longitudinaux (1) sont configurés de telle sorte que chaque partie supérieure du support qui présente la grande section transversale profilée (1a) est placée sur la tôle frontale (9) du support transversal avant le plancher (7), la partie inférieure de support qui présente la plus petite section transversale profilée (1b) formant un profil séparé, étant décalée vers le bas et prolongée en dessous de la tôle de plancher (3).

5. Système de support de plancher selon l'une des revendications 1 à 4, **caractérisé en ce que** les supports longitudinaux (1) s'étendent soit jusqu'à la hauteur d'un support transversal de siège (12) disposé sensiblement au milieu de l'habitacle (4), soit obliquement vers le haut jusqu'à la hauteur de la partie arrière de l'habitable (4) à proximité immédiate de la poutrelle (6) et d'un support transversal arrière de plancher (8) et s'appuient sur un composant rigide de carrosserie, par exemple un élément de noeud.

6. Système de support de plancher selon l'une des revendications 1 à 5, **caractérisé en ce que** le support transversal avant de plancher (7) et/ou les supports longitudinaux (1) sont constitués de tôle d'acier façonnée et sont fabriqués par la technique des flans découpés sur mesure.

7. Système de support de plancher selon l'une des revendications 1 à 5, **caractérisé en ce que** le support transversal avant de plancher (7) et/ou les supports longitudinaux (1) sont constitués de tôle d'acier à haute résistance.

8. Système de support de plancher selon l'une des revendications 1 à 7, **caractérisé en ce que** le support transversal avant de plancher (7) est fixé en son milieu à un élément en tunnel (13) disposé dans le sens de la longueur du véhicule et à l'intérieur de l'habitacle (4).

9. Système de support de plancher selon l'une des revendications 1 à 8, **caractérisé en ce que** le support transversal avant de plancher (7) est formé par un profilé creux ouvert placé par l'intérieur de l'habitacle (4) contre une tôle de plancher (3) qui s'étend vers le haut.

10. Système de support de plancher selon l'une des revendications 1 à 8, **caractérisé en ce que** le support transversal avant de plancher (7) est formé d'au moins deux coques profilées (14) placées l'une sur l'autre, qui forment pour leur part un profilé creux fermé et qui se raccordent à une tôle de plancher (3).

11. Système de support de plancher selon l'une des revendications 1 à 10, **caractérisé en ce qu'**à l'intérieur de l'habitable, au moins une tôle de renfort (17) qui s'étend éventuellement jusqu'à l'intérieur du contour de l'élément en tunnel (13) est placée sur la tôle de plancher (3) dans la zone du coin de liaison entre l'élément en tunnel (13), le support transversal avant de plancher (7) et la tôle de plancher (3).

12. Système de support de plancher selon l'une des revendications 1 à 11, **caractérisé en ce que** chaque support longitudinal (1) est relié solidairement à un élément de liaison (18) en colonne A disposé pratiquement dans le même plan.

13. Système de support de plancher selon l'une des revendications 1 à 12, **caractérisé en ce que** des logements (19) de fixation d'un cadre auxiliaire sont associés aux supports longitudinaux (1) et/ou aux éléments (15) de support longitudinal.
